# EUROPÄISCHE PATENTSCHRIFT

(11) **EP 1 743 226 B1**
(45) Veröffentlichungstag und Bekanntmachung des Hinweises auf die Patenterteilung: **10.03.2010**
(21) Anmeldenummer: 05740198.6
(22) Anmeldetag: 04.05.2005
(51) Int. Cl.: G05B 19/418

(54) **VERFAHREN ZUR BESTIMMUNG VON SERVICEINTERVALLEN FÜR FELDGERÄTE DER AUTOMATISIERUNGSTECHNIK**
METHOD FOR DETERMINING SERVICE INTERVALS FOR FIELD DEVICES OF AUTOMATION SYSTEMS
PROCEDE POUR DETERMINER DES INTERVALLES DE SERVICE POUR DES APPAREILS DE CHAMP RELEVANT DE LA TECHNIQUE D'AUTOMATISATION

(30) Priorität: 05.05.2004 DE 102004022517
(43) Veröffentlichungstag der Anmeldung: 17.01.2007
(73) Patentinhaber: Endress+Hauser (Deutschland) AG+Co. KG, 79576 Weil am Rhein (DE)
(72) Erfinder: DE JONG, Douwe, c/o Endress+Hauser B.V., NL-1410 AC Naarden (NL); SALUSBURY, John, CH-4153 Reinach (CH); DORNAN, Jackie, Cork (IE)
(74) Vertreter: Andres, Angelika Maria
(86) Internationale Anmeldenummer: PCT/EP2005/052059
(87) Internationale Veröffentlichungsnummer: WO 2005/109133

(56) Entgegenhaltungen:
- WO-A-01/67196
- TUCHENHAGEN GMBH: "Drainageventil TDV Betriebsanleitung" Oktober 2002 (2002-10), TUCHENHAGEN GMBH , BÜCHEN , XP002339945 Gefunden im Internet: URL:http://www.tuchenhagen.de/ndk_website/ Tuchenhagen/cmsresources.nsf/filenames/dra in_tdv_d+e.pdf/$file/drain_tdv_d+e.pdf> Seite 7
- B. ZIMOLONG (HRSG.): "Kooperationsnetze, flexible Fertigungsstrukturen und Gruppenarbeit - ein interdisziplinärer Ansatz" 1996, LESKE + BUDRICH , XP002348993 Gefunden im Internet: URL:http://www.ergonetz.de/maintenance/dow nloads/gkppss96.pdf> Seiten 277-307: Dietmar Gude, Christoph Koch et al.: Instandhaltung als Gemeinschaftsaufgabe - Anforderungen und Unterstützungsmöglichkeiten; Als Internetauszug: Seiten 1-21 Seite 6, Absatz 3 - Seite 8, Absatz 2 Seite 13, Absatz 3 - Seite 18, Absatz 1

## Beschreibung

Die Erfindung betrifft ein Verfahren zur Bestimmung von Serviceintervallen für Feldgeräte der Automatisierungstechnik.

In der Automatisierungstechnik werden vielfach Feldgeräte eingesetzt, die zur Erfassung / oder Beeinflussung von Prozessvariablen dienen.

Beispiele für derartige Feldgeräte sind Füllstandsmessgeräte, Massedurchflussmessgeräte, Druck- und Temperaturmessgeräte etc., die als Sensoren die entsprechenden Prozessvariablen Füllstand, Durchfluss, Druck bzw. Temperatur erfassen.

Zur Beeinflussung von Prozessvariablen dienen Aktoren, wie z. B. Ventile oder Pumpen, die es ermöglichen, den Durchfluss einer Flüssigkeit in einem Rohrleitungsabschnitt oder dem Füllstand in einem Behälter zu ändern.

Eine Vielzahl solcher Feldgeräte wird von der Fa. Endress + Hauser hergestellt und vertrieben.

In der Regel sind Feldgeräte über Feldbussysteme (Profibus, Foundation Fieldbus, HART, etc.) mit übergeordneten Einheiten, z. B. Leitsystemen oder Steuereinheiten verbunden. Diese dienen zur Prozesssteuerung, Prozessvisualisierung, Prozessüberwachung oder zur Inbetriebnahme der Feldgeräte.

Die einwandfreie Funktion der Feldgeräte bzw. aller an ein Feldbussystem angeschlossenen Einheiten ist von entscheidender Bedeutung für einen reibungslosen und sicheren Prozessablauf in einem Unternehmen. Störungen im Prozessablauf aufgrund von Fehlfunktionen einzelner Feldgeräte können erhebliche Kosten verursachen.

Wichtig für die einwandfreie Funktion von Feldgeräten ist u. a. deren regelmäßige Überprüfung entsprechend den vorgegebenen Serviceintervallen. Bei diesen regelmäßigen Servicearbeiten, die normalerweise von einem Servicetechniker ausgeführt werden, werden Verschleißteile ausgetauscht und besonders fehleranfällige Komponenten genauer überprüft.

In bestimmten Fällen ist auch eine neue Kalibrierung des Gerätes notwendig. Z. B. wenn wichtige Funktionsteile eines Feldgerätes repariert oder ausgetauscht werden müssen.

Eine Neu-Kalibrierung ist auch dann angebracht, wenn Feldgeräte physikalisch beschädigt sind oder ihr Kalibriersiegel verletzt wurde.

Auch der optische Eindruck eines Feldgerätes kann den Servicetechniker zu einer Neu-Kalibrierung veranlassen.

Intelligente Feldgeräte besitzen Diagnosefunktionen, die die Notwendigkeit einer Neu-Kalibrierung melden und gegebenenfalls anzeigen.

Feldgeräte werden bei äußerst unterschiedlichen Anwendungen / Prozessbedingungen eingesetzt. Stabile Prozessbedingungen liegen z. B. bei einer homogenen Flüssigkeit mit gleich bleibender Temperatur vor. Bei abrasiven oder korrosiven Flüssigkeiten, oder wenn Ansatzbildung möglich ist, spricht man von erschwerten Prozessbedingungen.

Normale Umgebungsbedingungen sind: geringe Luftfeuchte, kein Spritzwasser, Normatemperatur, kein Staub und keine Vibrationen.

Extreme Umgebungsbedingungen sind: Außeneinsatz d. h. das Feldgerät ist unterschiedlichen Wetterbedingungen ausgesetzt, hohe Luftfeuchtigkeit und starke Vibrationen.

Einzelne Feldgeräte benötigen deshalb eine Wartung in relativ kurzen Abständen (z.B. Serviceintervall = 6 Monate), bei manchen sind längere Serviceintervalle z.B. 2-6 Jahre ausreichend.

Die optimale Länger der Serviceintervalle hängt von einer Vielzahl von Faktoren ab.

Normalerweise werden Serviceintervalle für die Feldgeräte von den Herstellern empfohlenen. Hierbei werden applikationsspezifische Faktoren jedoch nur unzureichend berücksichtig.

Manche Feldgeräte dienen lediglich zur Visualisierung einer Prozessvariablen (z. B. Temperatursensoren).

Der Ausfall eines solchen Feldgerätes hat natürlich keine so gravierenden Konsequenzen auf einen Produktionsprozess, wie der Ausfall eines Durchflussmessers in einer Abfüllanlage, der den Stillstand der gesamten Produktion zur Folge haben kann.

Da mit einer Wartung auch immer Kosten für den Anwender verbunden sind, sollten unnötige Wartungen möglichst vermieden werden.

Bei zu langen Wartungsintervallen können Ausfälle von Feldgeräten, die im Extremfall Produktionsstillstände nach sich ziehen, nicht ausgeschlossen werden. Mit Produktionsstillständen sind immer erheblichen Kosten verbunden.

Für den Anlagenbetreiber ist somit von großer Bedeutung, dass die Wartungsintervalle für seine einzelnen Feldgeräte optimal, d. h. nicht zu lang und nicht zu kurz, gewählt sind.

WO 01/67196 A1 zeigt ein Automatisierungssystem mit einem Wartungsmodul, das ein Wartungsintervall in Abhängigkeit von einer tatsächlichen Einsatzzeit eines Feldgerätes berechnet.

Aufgabe der Erfindung ist es ein Verfahren zur Bestimmung von Serviceintervallen anzugeben, das die oben genanten Nachteile nicht aufweist,

Gelöst wird diese Aufgabe durch das im Anspruch 1 angegebene Verfahren.

Vorteilhafte Weiterentwicklungen der Erfindung sind in den Unteransprüchen angegeben.

Die wesentliche Idee der Erfindung besteht darin, dass bei einem Verfahren zur Bestimmung von Serviceintervallen für Feldgeräte der Automatisierungstechnik, gerätespezifische Parameter und anwendungsspezifische Parameter mittels Vorgabelisten ausgewählt werden und mit Hilfe eines auf einer Rechnereinheit ablaufenden Computerprogramms ein Serviceintervall für das vorgegebene Feldgerät bestimmt wird.

Das Serviceintervall für das betreffende Feldgerät ist somit spezifisch auch an die Applikation insbesondere an die Umgebungsbedingungen angepasst.

In einer besonders vorteilhaften Weiterntwicklung der Erfindung werden Serviceinformationen (Historiendaten), die bei früheren Servicearbeiten aufgezeichnet wurden, ausgewertet, um Änderungen in der Länge der Wartungsintervalle einzelner Feldgeräte zu bestimmen.

Bei den Serviceinformationen kann es sich beispielsweise um einzelne Kalibrierdaten oder auch um Sätze von Kalibrierdaten handeln.

Nachfolgend ist die Erfindung anhand eines in der Zeichnung dargestellten Ausführungsbeispiels näher erläutert.

Es zeigen:

Fig. 1 Kommunikationsnetzwerk der Automatisierungstechnik;

Fig. 2 Eingabemaske für ein Programm zur Bestimmung von

Serviceintervallen;

Fig.3 Eingabemaske gemäß Fig. 2 bei Auswahl des

Parameters spezieller Parameter;

Fig. 4 Flussdiagramm;

Fig. 5 Flussdiagramm.

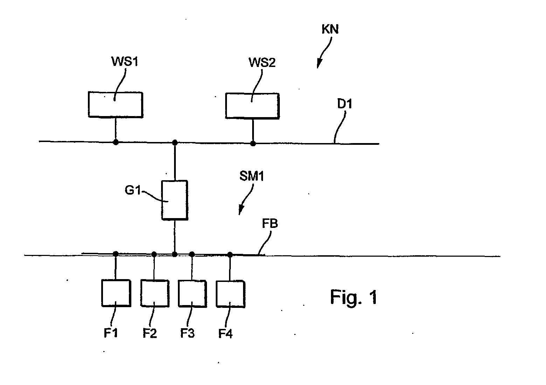

In Fig. 1 ist ein Kommunikationsnetzwerk KN der Automatisierungstechnik näher dargestellt. An einen Datenbus D1 sind mehrere Rechnereinheiten (Workstations) WS1, WS2 angeschlossen. Diese Rechnereinheiten dienen als übergeordnete Einheiten (Leitsysteme bzw. Steuereinheiten) zur Prozessvisualisierung, Prozessüberwachung und zum Engineering sowie zum Bedienen und Überwachen von Feldgeräten. Der Datenbus D1 arbeitet z. B. nach dem Profibus DP-Standard oder nach dem HSE (High Speed Ethernet- Standard) der Foundation Fieldbus. Über ein Gateway G1, das auch als linking device oder als Segmentkoppler bezeichnet wird, ist der Datenbus D1 mit einem Feldbussegment SM1 verbunden. Das Feldbussegment SM1 besteht aus mehreren Feldgeräten F1, F2, F3, F4 die über einen Feldbus FB miteinander verbunden sind. Bei den Feldgeräten F1, F2, F3, F4, handelt es sich sowohl um Sensoren sowie um Aktoren. Der Feldbus FB arbeitet entsprechend nach einem der bekannten Feldbusstandards Profibus, Foundation Fieldbus oder HART.

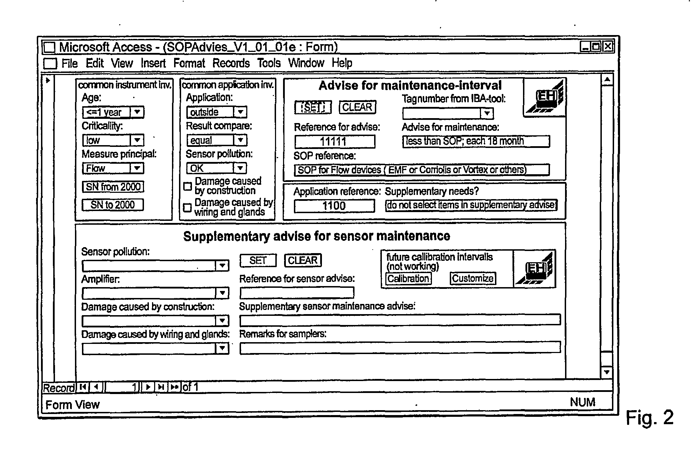

In Fig. 2 ist eine Eingabemaske für ein Programm zur Bestimmung der Länge von Serviceintervallen für Feldgeräte näher dargestellt. Das Programm läuft auf einer Rechnereinheit ab, die eine zur Dateneingabe eine Eingabeeinheit (z.B. Tatstatur) und zur Datenausgabe eine Ausgabeeinheit (z. B. LCD-Bildschirm) aufweist.

Das Programm läuft als eigenständige "stand alone" Anwendung auf einer tragbaren Recheneinheit (Laptop) z.B. als Microsoft Access Anwendung ab. Es kann aber ohne weiteres auch in umfangreichere Anlagenüberwachungs-Anwendungen wie z. B. W@M (Web Enabled Asset Management) oder IMS (Instrument Management Solution), die von der Fa. Endress + Hauser vertrieben werden, integriert werden.

Für das erfindungsgemäße Verfahren wird nun ein spezielles Feldgerät, das in einem Automatisierungsprozess eingesetzt wird und dessen Serviceintervalle bestimmt werden sollen, betrachtet.

In einem ersten Verfahrensschritt werden für das Programm die gerätespezifischen Parameter dieses Feldgerätes benötigt.

Hierfür werden bestimmte Eigenschaften von Feldgeräten wie z. B. Alter, Wichtigkeit für den Prozessablauf (criticability), Messprinzip als entsprechende Vorgabelisten dem Anwender in einer Bildschirmmaske angezeigt. Der Anwender wählt aus den Vorgabenlisten, die zutreffenden Parameter für das spezielle Feldgerät aus.

Im vorliegenden Fall ist das Feldgerät wenige als ein Jahr alt, die Wichtigkeit wird mit gering (low) bewertet und das Feldgerät ist ein Durchflussmesser (Messprinzip Flow).

Entsprechend werden die anwendungsspezifischen Parameter ausgewählt. Das betrachtet Feldgerät wird im Außenbereich (outside) eingesetzt, der Ergebnisvergleich mit einer früheren Wartung ist auf gleich (equal) gesetzt und die Sensorverschmutzung ist OK.

Das Programm schlägt ein Serviceintervall von 18 Monaten vor. Diese Zeitspanne ist länger als die vom Hersteller in den SOPs (Standard Operation Procedures) empfohlene.

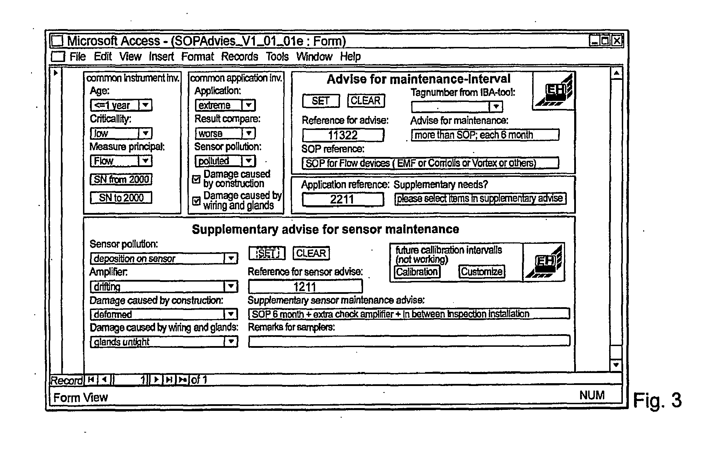

In Fig. 3 ist die Eingabemaske gemäß Fig. 2 für den Fall dass der Parameter Verschmutzung auf Sensor (deposition on sensor) bei der Eigenschaft Sensorverschmutzung (sensor pollution) ausgewählt wurde.

In diesem Fall werden weitere Parameter über zusätzliche Auswahllisten angezeigt.

Ausgewählt sind die Parameter Ansatz am Messaufnehmer des Feldgerätes, Verstärker in der Messschaltung des Feldgerätes driftet, das Feldgerät ist deformiert und die Anschlüsse sind undicht.

Außerdem ist für die Anwendung extrem und der Ergebnisvergleich mit den letzten Servicearbeiten ist auf schlimmer (worse) gesetzt. Weiterhin sind die Parameter Damage caused by construction und Damage caused by wiring and glands gesetzt.

Aufgrund dieser eingegebenen Parameter wird ein Serviceintervall für dieses betreffende Feldgerät von 6 Monaten vorgeschlagen.

Dieses ermittelte Serviceintervall ist damit sowohl auf das spezielle Feldgerät wie auch auf die Anwendung genauestens abgestimmt.

Entsprechend dem ermittelten Serviceintervall werden die Wartungs- und/oder Kalibrierarbeiten an dem Feldgerät durchgeführt.

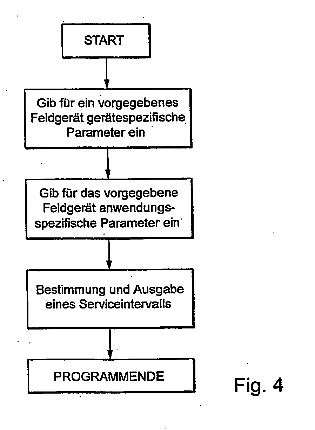

Das erfindungsgemäße Verfahren ist in Fig. 4 als Flussdiagramm nochmals dargestellt.

In einer Weiterentwicklung der Erfindung erfolgt eine Anpassung der Länge der Serviceintervalle. Serviceintervalle sind meist für einzelne Feldgeräte oder für Typen von Feldgeräten vorgegeben.

Um die Länge der Serviceintervalle noch besser an die betreffenden Anwendung anzupassen, werden Serviceinformationen (entweder für ein bestimmtes Feldgerät oder für einen Typ von Feldgerät) statistisch ausgewertet und entsprechend dem Ergebnis der Auswertung eine Verlängerung, eine Verkürzung oder ein Beibehalten des bisherigen Serviceintervalls vorgeschlagen.

Für die statistische Auswertung werden für die als Daten vorliegenden Serviceinformationen Toleranzbereiche festgelegt.

Liegt ein gewisser Prozentsatz (z.B. 100% - x = 98%) der Daten (z. B. Kalibrierdaten) innerhalb des vorgegebenen Toleranzbereichs so kann das Serviceintervall beibehalten oder unter Umständen sogar verlängert werden.

Liegt ein gewisser Prozentsatz (z.B. x = 2%) der Daten außerhalb des vorgegebenen Toleranzbereichs so muss das Serviceintervall gegebenenfalls verkürzt werden.

Nach der Durchführung der Servicearbeiten wird für mindestens ein Feldgerät ein Zertifizierungsprotokoll oder ein Bericht erstellt.

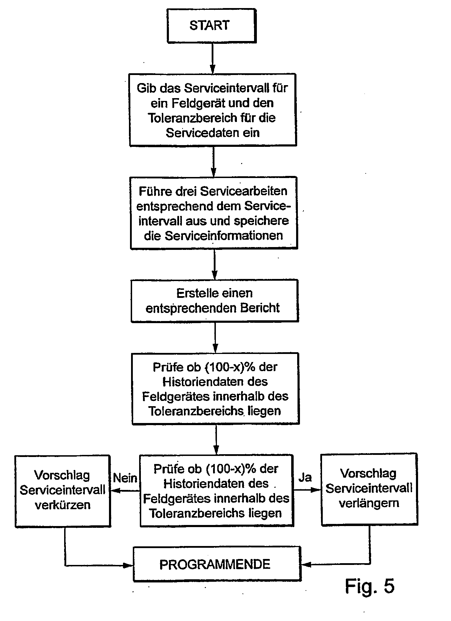

Das erfindungsgemäße Verfahren ist in Fig. 5 als Flussdiagramm nochmals dargestellt.

Problematisch ist für den Anwender, wenn eine Verlängerung des Serviceintervalls vorgeschlagen wird, diese Verlängerung insbesondere bei zertifizierten Anlagen, gegenüber den Kontrolleinrichtungen zu rechtfertigen.

Deshalb wird erfindungsgemäß vorgeschlagen, dass bei einer Verlängerung des Serviceintervalls, das betreffende Feldgerät nach Ablauf des bisherigen Serviceintervalls einen Selbsttest durchführt, um einen Nachweis führen zu können, dass das betreffende Feldgerät nach Ablauf des bisherigen Serviceintervalls noch einwandfrei gearbeitet hat. Der Selbsttest wird gegebenenfalls von dem Programm automatisch ausgelöst.

Sollte der Selbsttest negativ ausfallen, so sind ohnehin Servicearbeiten notwendig und es ist zu überlegen, ob das Serviceintervall nicht wieder verkürzt werden muss.

## Patentansprüche

1. Verfahren zur Bestimmung der Länge von Serviceintervallen für Feldgeräte der Automatisierungstechnik mit Hilfe einer Rechnereinheit, die eine Eingabe- und eine Ausgabeeinheit aufweist, wobei für ein Feldgerät oder für einen Typ eines Feldgerätes ein Serviceintervall vorgegeben wird, wobei Servicearbeiten für das Feldgerät oder für den Typ des Feldgeräts entsprechend dem vorgegebenen Serviceintervall durchgeführt werden, **dadurch gekennzeichnet, dass** das vorgegebene Serviceintervall dadurch festgelegt wird, dass gerätespezifische Parameter und anwendungsspezifische Parameter des Feldgerätes mittels Vorgabelisten ausgewählt und eingegeben werden, wobei anhand der eingegebenen Parameter die Länge des Serviceintervalls für das vorgegebene Feldgerät mit Hilfe eines auf der Rechnereinheit ablaufenden Computerprogramms bestimmt und ausgegeben wird, wobei gewonnene Serviceinformationen für das Feldgerät oder für den Typ des Feldgeräts statistisch ausgewertet werden, wobei aufgrund der Auswertung der entsprechenden Daten der Serviceinformationen ermittelt wird, ob das vorgegebene Serviceintervall beibehalten, verlängert oder verkleinert wird, wobei das Serviceintervall beibehalten oder unter Umständen verlängert wird, wenn ein gewisser Prozentsatz der Daten der Serviceinformationen innerhalb eines vorgegebenen Toleranzbereichs liegt und wobei das Serviceintervall verkleinert wird, wenn ein gewisser Prozentsatz der Daten der Serviceinformationen außerhalb des vorgegebenen Toleranzbereichs liegt.

2. Verfahren nach Anspruch 1, wobei die gerätespezifischen Parameter z. B. das Alter oder das Messprinzip des vorgegebenen Feldgerätes sind.

3. Verfahren nach Anspruch 1, wobei die anwendungsspezifischen Parameter z. B. der Standort oder der Verschmutzungsgrad eines am dem betreffenden Feldgerät vorgesehenen Messwertaufnehmers sind.

4. Verfahren nach einem der Ansprüche 1-3, wobei das Serviceintervall die Servicearbeiten, d. h. die regelmäßige zeitliche Abfolge von Wartungs- und/oder Kalibrierarbeiten des vorgegebenen Feldgerätes bestimmt.

5. Verfahren nach einem der Ansprüche 1 - 2, wobei von zumindest einem Feldgerät ein Bericht oder ein Zertifizierungsprotokoll erstellt wird.

6. Verfahren nach einem der Ansprüche 1, wobei bei einer Verlängerung des Serviceintervalls das Feldgerät nach Ablauf des bisherigen Serviceintervalls einen Selbsttest ausführt, um den Nachweis zu führen, dass das Feldgerät nach Ablauf des bisherigen Serviceintervalls noch einwandfrei gearbeitet hat.

7. Verfahren nach Anspruch 1, wobei Historiendaten von Serviceinformationen, die bei führeren Servicearbeiten aufgezeichnet wurden, ausgewertet werden, um die Änderungen der Länge der Serviceintervalle einzelner Feldgeräte zu bestimmen.

8. Verfahren nach Anspruch 7, wobei es sich bei den Historiendaten um einzelne Kalibrierdaten oder um Sätze von Kalibrierdaten handelt.

## Claims

1. Method for determining the length of service intervals for automation field devices using a computer unit that has an input and output unit, whereby a service interval is specified for a field device or a type of field device and the service tasks are carried out for the field device or the field device type in accordance with the specified service interval. The specified service interval is defined in that device-specific parameters and application-specific parameters of the field device are selected and entered using default lists. Using the parameters entered, the length of the service interval for the specified field device is determined and output using a computer program running on the computer unit, whereby any service information gathered for the field device or the field device type is analyzed statistically. On the basis of the analysis of the corresponding service information data, it is determined whether the specified service interval is kept, extended or shortened, where the service interval is kept or extended if a certain percentage of the service information data is within a specified tolerance range, and where the service interval is shortened if a certain percentage of the service information data is outside the specified tolerance range.

2. Method as per Claim 1, **characterized in that** the device-specific parameters constitute, for example, the age or the measuring principle of the specified field device.

3. Method as per Claim 1, **characterized in that** the application-specific parameters constitute, for example, the location or degree of contamination of a sensor provided on the field device in question.

4. Method as per one of the Claims 1-3, **characterized in that** the service interval determines the service tasks, i.e. the regular sequence of maintenance and/or calibration tasks for the specified field device.

5. Method as per one of the Claims 1-2, **characterized in that** a report or a certification log is created by at least one field device.

6. Method as per Claim 1, **characterized in that** if the service interval is extended, the field device performs a self-test once the previous service interval has elapsed to prove that the field device was operating correctly at the end of the previous service interval.

7. Method as per Claim 1, **characterized in that** the history data of service information, which was recorded during service tasks performed earlier, are analyzed to determine the changes in the lengths of the service intervals for the individual field devices.

8. Method as per Claim 7, **characterized in that** the history data constitute individual calibration data or calibration data records.

## Revendications

1. Procédé destiné à la détermination de la longueur d'intervalles de maintenance pour les appareils de terrain de la technique d'automatisation à l'aide d'une unité d'ordinateur, laquelle comporte une unité d'entrée et une unité de sortie, l'intervalle de maintenance étant prédéfini pour un appareil de terrain ou pour un type d'un appareil de terrain, les travaux de maintenance relatifs à l'appareil de terrain ou au type de l'appareil de terrain étant réalisés conformément à l'intervalle de maintenance, **caractérisé en ce que** l'intervalle de maintenance prédéfini est défini **en ce que** des paramètres spécifiques à l'appareil et des paramètres spécifiques à l'application de l'appareil de terrain sont sélectionnés et entrés au moyen de listes prédéfinies, procédé au cours duquel la longueur de l'intervalle de maintenance pour l'appareil de terrain prédéfini est déterminée et affichée sur la base des paramètres entrés à l'aide d'un programme informatique exécuté sur une unité d'ordinateur, procédé au cours duquel les informations de maintenance acquises pour l'appareil de terrain ou pour le type de l'appareil de terrain sont évaluées de façon statique, procédé au cours duquel il est déterminé, sur la base de l'évaluation des données correspondantes des informations de maintenance, si l'intervalle de maintenance est conservé, rallongé ou raccourci, l'intervalle de maintenance étant conservé ou éventuellement rallongé lorsqu'un certain pourcentage de données des informations de maintenance se situe au sein d'une plage de tolérance prédéfinie et l'intervalle de maintenance étant raccourci lorsqu'un certain pourcentage de données des informations de maintenance se situe en dehors de la plage de tolérance prédéfinie.

2. Procédé selon la revendication 1, pour lequel les paramètres spécifiques à l'appareil sont, par exemple, l'âge ou le principe de mesure de l'appareil de terrain prédéfini.

3. Procédé selon la revendication 1, pour lequel les paramètres spécifiques à l'application sont, par exemple, le lieu d'utilisation ou le degré de contamination d'un transmetteur de mesure prévu sur l'appareil de terrain concerné.

4. Procédé selon l'unes des revendications 1 à 3, pour lequel l'intervalle de maintenance détermine les travaux de maintenance, c.-à-d. le déroulement temporel de travaux de maintenance et/ou d'étalonnage de l'appareil de terrain prédéfini.

5. Procédé selon l'une des revendications 1 à 2, pour lequel un rapport ou un procès-verbal de certification est généré par au moins un appareil de terrain.

6. Procédé selon la revendication 1, pour lequel, en cas de rallongement de l'intervalle de maintenance de l'appareil de terrain au terme de l'intervalle de maintenance actuel, un autotest est exécuté afin de prouver que l'appareil de terrain fonctionne encore de façon irréprochable au terme de l'intervalle de maintenance actuel.

7. Procédé selon la revendication 1, pour lequel les données historiques d'informations de maintenance, qui ont été enregistrées au cours de travaux de maintenance antérieurs, sont évaluées afin de déterminer les changements de la longueur des intervalles de maintenance d'appareils de terrain individuels.

8. Procédé selon la revendication 7, pour lequel il s'agit, concernant les données historiques, de données d'étalonnage individuelles ou de blocs de données d'étalonnage.
